(19) Europäisches Patentamt
European Patent Office
Office européen des brevets

(11) **EP 3 014 082 B1**

(12) **FASCICULE DE BREVET EUROPEEN**

(45) Date de publication et mention de la délivrance du brevet:
**03.05.2017 Bulletin 2017/18**

(21) Numéro de dépôt: **14735619.0**

(22) Date de dépôt: **13.06.2014**

(51) Int Cl.:
*F01N 11/00* (2006.01)     *F01N 3/20* (2006.01)

(86) Numéro de dépôt international:
**PCT/FR2014/051452**

(87) Numéro de publication internationale:
**WO 2014/207340 (31.12.2014 Gazette 2014/53)**

(54) **SYSTÈME ET PROCÉDÉ DE DIAGNOSTIC DE LA RÉDUCTION CATALYTIQUE SÉLECTIVE D'UN VÉHICULE AUTOMOBILE**

SYSTEM UND VERFAHREN ZUR DIAGNOSE DES SELEKTIVEN KATALYTISCHEN REDUKTIONSSYSTEMS EINES KRAFTFAHRZEUGS

SYSTEM AND METHOD FOR DIAGNOSING THE SELECTIVE CATALYTIC REDUCTION SYSTEM OF A MOTOR VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.06.2013 FR 1356261**

(43) Date de publication de la demande:
**04.05.2016 Bulletin 2016/18**

(73) Titulaire: **Renault S.A.S.**
**92100 Boulogne-Billancourt (FR)**

(72) Inventeurs:
• **CHANZY, Romain**
  **F-75116 Paris (FR)**
• **DI-PENTA, Damiano**
  **F-75013 Paris (FR)**

(56) Documents cités:
**EP-A1- 2 357 334      DE-A1-102010 029 740**
**US-A1- 2007 144 151**

**Description**

L'invention a pour domaine technique le diagnostic embarqué des fonctions d'un véhicule automobile, et plus particulièrement le diagnostic de la réduction catalytique des émissions polluantes d'un véhicule automobile de type diesel.

Afin de répondre à la baisse des seuils admis pour les émissions de gaz polluants des véhicules automobiles, des systèmes de post-traitement des gaz de plus en plus complexes sont disposés dans la ligne d'échappement des moteurs à mélange pauvre. Ceux-ci permettent de réduire notamment les émissions de particules et d'oxydes d'azote en plus du monoxyde de carbone et des hydrocarbures imbrûlés.

Le système de réduction catalytique sélective, également appelé simplement réduction catalytique sélective (acronyme « SCR » issu de l'anglais pour « Selective Catalytic Reduction»), est connu pour être un moyen efficace de traitement des oxydes d'azote (NO$_x$). Ce système consiste en un traitement continu des émissions d'oxydes d'azote (nitrates et nitrites). Il nécessite l'utilisation d'un catalyseur et d'un injecteur d'agent réducteur disposés dans la ligne d'échappement.

Ce système nécessite donc l'adjonction d'un réservoir supplémentaire contenant l'agent réducteur (AdBlue par exemple), du système d'injection spécifique, d'un système permettant de mélanger l'agent réducteur aux gaz d'échappement et d'un système catalytique accélérant la réduction des oxydes d'azote par l'agent réducteur injecté et/ou stocké sur le catalyseur. Il est à noter qu'afin d'optimiser l'efficacité de traitement des oxydes d'azote, le mélange entrant dans le catalyseur de la réduction catalytique sélective SCR doit être le plus homogène possible ce qui implique l'emploi du système de mélange mentionné ci-dessus.

Dans ce système, la quantité d'agent réducteur injectée ainsi que la quantité d'agent réducteur stockée sur le catalyseur doivent être adaptés finement : en effet, un surdosage d'agent réducteur (stocké ou injecté) ne conduirait qu'à augmenter inutilement la consommation de réducteurs et à générer d'éventuelles émissions d'ammoniac à l'échappement (composé fortement odorant et très toxique). Un sous-dosage, par contre, limite l'efficacité obtenue et augmente donc les émissions d'oxydes d'azote à l'échappement.

Chimiquement, la réduction catalytique sélective stocke l'ammoniac (NH$_3$) contenu dans l'agent réducteur, tel que l'urée. L'ammoniac ainsi stocké dans la réduction catalytique sélective réduit ensuite les oxydes d'azote (NO$_x$). Ainsi, pour une efficacité optimale de la réduction catalytique sélective, il est nécessaire de réguler la masse d'ammoniac (NH$_3$) stocké, aussi appelée buffer d'ammoniac (NH$_3$). Or, en vieillissant, la capacité de stockage d'ammoniac (NH$_3$) de la réduction catalytique sélective se dégrade, ce qui génère une perte d'efficacité.

Les normes Euro5 et Euro6 imposent des diagnostics embarqués (acronyme anglais « OBD » pour « On Board Diagnosis ») sur l'ensemble de la réduction catalytique sélective. Cela implique donc de vérifier de manière récurrente si la réduction catalytique sélective conserve une efficacité de traitement des oxydes d'azotes (NO$_x$) suffisante pour répondre aux seuils de diagnostic embarqué. Jusqu'à présent, le diagnostic du catalyseur de la réduction catalytique sélective SCR se base sur la dégradation l'efficacité de traitement des oxydes d'azote (NOx), comme cela est montré dans le document DE102010029740. Toutefois, il n'est pas possible à l'heure actuelle de diagnostiquer la perte de capacité à stocker l'ammoniac NH$_3$ qui est une conséquence plus directe du vieillissement. La principale difficulté de ce nouveau diagnostic est qu'il faut savoir discriminer une perte d'efficacité réversible, qui se compense par exemple en adaptant le contrôle de l'injection d'urée, d'une perte définitive, quand la SCR n'a plus de sites de stockage de l'ammoniac NH$_3$ pour traiter les oxydes d'azote NO$_x$. On parle alors du diagnostic de la capacité de stockage de l'ammoniac (acronyme anglais « ASC » pour « Ammonia Storage Capacity »), grandeur caractérisée par une la masse maximale d'ammoniac (NH$_3$) stockable, image directe de l'état de vieillissement de la SCR.

De l'état de la technique, on connait les documents suivants.

Le document WO 2008/103113 divulgue un diagnostic (OBD) du système SCR basé sur l'efficacité du traitement des oxydes d'azote NO$_x$ dans des conditions spécifiques. L'efficacité de traitement des oxydes d'azote NO$_x$ par la réduction catalytique sélective SCR dépend fortement du rapport entre le dioxyde d'azote et les oxydes d'azote NO$_2$/NO$_x$ à l'entrée de la réduction catalytique sélective SCR. Or, ce ratio ne peut pas être mesuré et est affecté par le niveau de chargement en soufre du catalyseur DOC et par le niveau chargement en suie du filtre à particules FAP en amont de la réduction catalytique sélective SCR. Ainsi, on compare l'efficacité déterminée par un modèle de la réduction catalytique sélective SCR embarqué et celle déterminée via un capteur d'oxydes d'azotes NO$_x$ disposé en aval de la réduction catalytique sélective SCR dans des conditions où a priori le rapport NO$_2$/NO$_x$ est nominal, c'est-à-dire, après une désulfatation du catalyseur DOC et/ou une régénération du filtre à particules FAP. Si, dans les conditions nominales, l'efficacité mesurée et inférieure à l'efficacité calculée par le modèle, une panne de la réduction catalytique sélective SCR est détectée.

Le document WO 2007/037730 divulgue un diagnostic de la réduction catalytique sélective SCR basé sur la comparaison de l'efficacité de traitement des oxydes d'azote NO$_x$ donnée par un capteur d'oxydes d'azote NO$_x$ disposé en aval de la réduction catalytique sélective SCR avec une efficacité nominale sur un point de fonctionnement moteur (régime, charge) donné. Si l'efficacité de la SCR est inférieure à la référence on détecte une panne.

Il existe donc un besoin pour un système et un procédé de diagnostic d'une réduction catalytique sélective prenant en compte la perte de capacité à stocker l'ammoniac, conséquence directe du vieillissement.

Un objet de l'invention est un système de diagnostic de la réduction catalytique sélective d'un véhicule automobile muni d'un moteur à combustion interne connecté par un collecteur d'échappement à successivement un ensemble comprenant un catalyseur d'oxydes d'azotes et un filtre à particules et une réduction catalytique sélective. Le système comprend :

un moyen de vidange de la masse d'ammoniac stockée dans la réduction catalytique sélective,
un moyen d'injection d'urée disposé en amont de la réduction catalytique sélective,
un moyen de commande de la vidange et de l'injection,
un moyen de mesure de la quantité d'ammoniac en sortie de la réduction catalytique sélective,
un système de détermination de la masse maximale d'ammoniac stockée dans la réduction catalytique sélective,
un moyen de comparaison de la valeur déterminée de la masse maximale d'ammoniac stockée dans la réduction catalytique sélective à un seuil, apte à émettre un signal de défaut en fonction du résultat de la comparaison.

Le moyen de détermination de la masse maximale d'ammoniac stockée dans la réduction catalytique sélective peut comprendre un moyen de détermination du taux d'ammoniac en sortie de la réduction catalytique sélective en fonction du signal reçu du moyen de mesure, et un moyen de modélisation de la réduction catalytique sélective apte à estimer le taux d'ammoniac et le taux d'oxydes d'azote en aval de la réduction catalytique sélective via un modèle. Le moyen de détermination de la masse maximale peut comprendre également un moyen de calcul apte à déterminer l'écart entre la mesure du taux d'ammoniac en sortie de la réduction catalytique sélective et les valeurs modélisées du taux d'ammoniac et du taux d'oxydes d'azote en aval de la réduction catalytique sélective, et à déterminer une nouvelle valeur de la masse maximale d'ammoniac stockée dans la réduction catalytique sélective si l'écart est positif, à transmettre la nouvelle valeur de la masse maximale d'ammoniac stockée dans la réduction catalytique sélective au moyen de modélisation de la réduction catalytique sélective afin de déterminer de nouvelles valeurs jusqu'à ce que l'écart soit nul. Le moyen de calcul peut être apte à émettre la masse maximale d'ammoniac stockée dans la réduction catalytique sélective lorsque l'écart est nul.

Le signal de défaut de la réduction catalytique sélective peut prendre une première valeur si la valeur déterminée de la masse maximale d'ammoniac stockée dans la réduction catalytique sélective est inférieure à un seuil, tandis qu'il prend une deuxième valeur si tel n'est pas le cas.

Le moyen de modélisation de la réduction catalytique sélective peut être apte à estimer le taux d'ammoniac en aval de la réduction catalytique sélective via un modèle fonction du rapport entre le dioxyde d'azote et les oxydes d'azote en aval du collecteur d'échappement, de la température en amont de la réduction catalytique sélective, de la masse d'urée injectée en amont de la réduction catalytique sélective, de la masse maximale d'ammoniac stockée dans la réduction catalytique sélective, du débit à l'échappement, du taux d'ammoniac en amont de la réduction catalytique sélective, et du taux d'oxydes d'azote en amont de la réduction catalytique sélective.

Le moyen de modélisation de la réduction catalytique sélective peut également être apte à déterminer le rapport entre le dioxyde d'azote et le monoxyde d'azote en aval du collecteur d'échappement en fonction de la température en amont de l'ensemble de filtre à particules et catalyseur, du débit à l'échappement du moteur à combustion interne et du taux d'oxydes d'azote en aval du collecteur d'échappement.

Un autre objet de l'invention est un procédé de diagnostic de la réduction catalytique sélective d'un véhicule automobile muni d'un moteur à combustion interne connecté par un collecteur d'échappement à successivement un ensemble comprenant un catalyseur d'oxydes d'azotes et un filtre à particules et une réduction catalytique sélective. Le procédé comprend les étapes suivantes :

on vidange la masse d'ammoniac stockée dans la réduction catalytique sélective,
on procède à une injection, en amont de la réduction catalytique sélective, d'une masse d'urée supérieure à la masse maximale pouvant être stockée par la réduction catalytique sélective,
on détermine la masse maximale d'ammoniac stockée dans la réduction catalytique sélective,
on émet un signal de défaut en fonction du résultat de la comparaison de la valeur déterminée de la masse maximale d'ammoniac stockée dans la réduction catalytique sélective à un seuil.

On peut déterminer la masse maximale d'ammoniac stockée dans la réduction catalytique sélective en effectuant les étapes suivantes :

on initialise un modèle avec une valeur mémorisée de la masse maximale pouvant être stockée dans la réduction catalytique sélective,
on estime le taux d'ammoniac et le taux d'oxydes d'azote en aval de la réduction catalytique sélective via un modèle,

on mesure le taux d'ammoniac en sortie de la réduction catalytique sélective,

on détermine l'écart entre le taux d'ammoniac en sortie de la réduction catalytique sélective et les valeurs modélisées du taux d'ammoniac et du taux d'oxydes d'azote en aval de la réduction catalytique sélective,

si l'écart est positif, on détermine une nouvelle valeur de la masse maximale d'ammoniac stockée dans la réduction catalytique sélective, et on détermine de nouvelles valeurs du taux d'ammoniac et du taux d'oxydes d'azote en aval de la réduction catalytique sélective via le modèle, jusqu'à ce que l'écart soit nul,

lorsque l'écart est nul, on émet la masse maximale stockée dans la réduction catalytique sélective.

Si la valeur déterminée de la masse maximale d'ammoniac stockée dans la réduction catalytique sélective est inférieure à un seuil, on peut émettre un signal de défaut de la réduction catalytique sélective prenant une première valeur, tandis qu'il prend une deuxième valeur si tel n'est pas le cas.

On peut estimer le taux d'ammoniac et le taux d'oxydes d'azote en aval de la réduction catalytique sélective via un modèle fonction du rapport entre la quantité de monoxyde d'azote et de dioxyde d'azote en aval du collecteur d'échappement, de la température en amont de la réduction catalytique sélective, de la masse d'urée injectée en amont de la réduction catalytique sélective, de la masse maximale d'ammoniac stockée dans la réduction catalytique sélective, du débit à l'échappement, du taux d'ammoniac en amont de la réduction catalytique sélective, et du taux d'oxydes d'azote en amont de la réduction catalytique sélective.

On peut déterminer le rapport entre le monoxyde d'azote et le dioxyde d'azote en aval du collecteur d'échappement en fonction de la température en amont de l'ensemble de filtre à particules et catalyseur, du débit à l'échappement du moteur à combustion interne et du taux d'oxydes d'azote en aval du collecteur d'échappement.

D'autres buts, caractéristiques et avantages apparaîtront à la lecture de la description suivante donnée uniquement en tant qu'exemple non limitatif et faite en référence aux dessins annexés sur lesquels :

- la figure 1 illustre les principaux éléments d'un moteur à combustion interne muni d'une réduction catalytique sélective et d'un système de diagnostic embarqué,
- la figure 2 illustre les principaux éléments d'un système de détermination de la capacité maximale de stockage de l'ammoniac, et
- la figure 3 illustre les principales étapes d'un procédé de diagnostic de la réduction catalytique sélective.

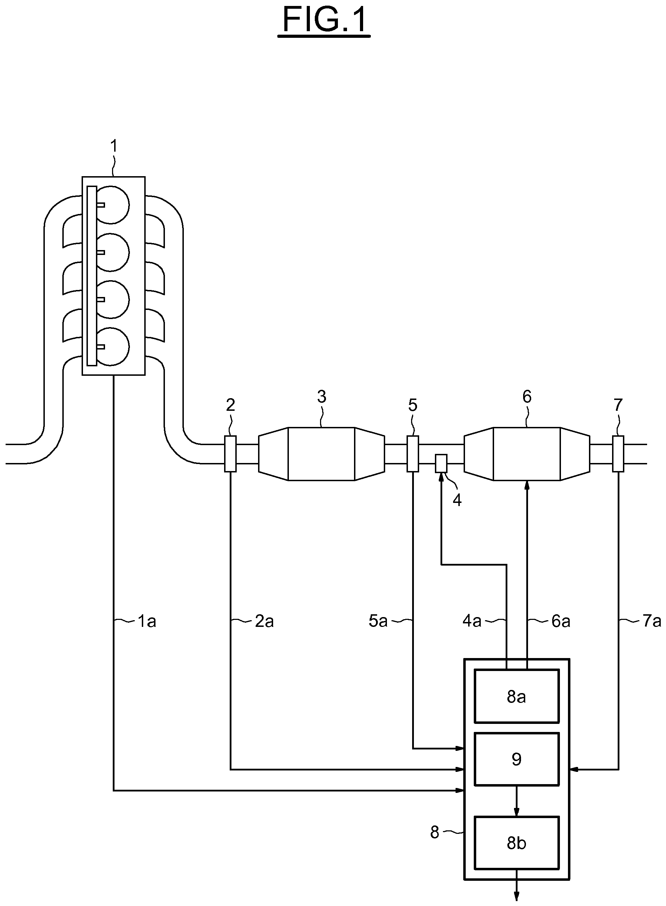

La figure 1 illustre un moteur à combustion interne 1 d'un véhicule automobile relié par son collecteur d'échappement à une conduite d'échappement. Piqués sur la conduite d'échappement en aval du collecteur d'échappement, on peut voir successivement une première sonde de température 2, un ensemble 3 comprenant un catalyseur d'oxydation et un filtre à particules , un injecteur d'urée 4, un deuxième capteur de température 5, une réduction catalytique sélective 6 et un capteur d'oxydes d'azote 7.

De préférence, le catalyseur d'oxydation est logé dans l'ensemble 3 en amont du filtre à particules, c'est-à-dire au plus près du moteur 1, de manière à atteindre sa température d'amorçage au plus vite.

De préférence également, le deuxième capteur de température 5 est implanté en amont de l'injecteur 4 de manière que la mesure de température ne soit pas perturbée par l'injection d'urée.

Le moteur à combustion interne 1 est connecté directement ou par l'intermédiaire d'un moyen de commande à un système de diagnostic embarqué 8 par le biais d'une connexion 1a portant le débit d'échappement et le débit d'oxydes d'azote $NO_x$. Ces débits sont issus d'une cartographie ou d'un moyen d'estimation dépendant notamment du point de fonctionnement du moteur à combustion interne 1.

Le premier capteur de température 2 est connecté au système de diagnostic embarqué 8 par le biais d'une connexion 2a portant la température en amont de l'ensemble 3.

Le deuxième capteur de température 5 est connecté au système de diagnostic embarqué 8 par le biais d'une connexion 5a portant la température en amont de la réduction catalytique sélective 6.

Le capteur d'oxydes d'azote 7 est connecté au système de diagnostic embarqué 8 par le biais d'une connexion 7a portant la quantité d'oxydes d'azote et d'ammoniac en aval de la réduction catalytique sélective 6.

Pour diagnostiquer la réduction catalytique sélective (SCR), on estime la masse maximale d'ammoniac stockée dans des conditions de fuite de ce même ammoniac. Le capteur d'oxydes d'azote ($NO_x$) référencé 7, disposé en aval de la réduction catalytique sélective 6, ne distingue pas les oxydes d'azote ($NO_x$) de l'ammoniac ($NH_3$). On peut alors tirer profit de cette propriété pour détecter les fuites d'ammoniac ($NH_3$), en déduire la masse maximale d'ammoniac stockée et, en fonction de cette valeur, diagnostiquer une panne.

Cependant, pour estimer la masse maximale d'ammoniac stockée, il faut savoir estimer la masse d'ammoniac stockée à un instant donné en fonction d'un modèle de la réduction catalytique sélective 6. Le modèle décrit plus loin est compris dans un système de détermination 9 de la capacité maximale de stockage de l'ammoniac. Pour pouvoir estimer la masse maximale d'ammoniac stockée, le modèle est asservi au capteur d'oxydes d'azote ($NO_x$) référencé 7.

De même, afin de déterminer la masse maximale d'ammoniac stockée, on vidange la réduction catalytique sélective par le biais d'un moyen de commande 8a de la vidange et de l'injection d'urée relié à un actionneur par la connexion 6a. Alternativement, le moyen de commande 8a peut interrompre l'injection durée par l'injecteur 4 afin d'obtenir un effet équivalent à une vidange par consommation de tout l'ammoniac présent dans réduction catalytique sélective. La vidange permettant de fixer une référence absolue, la masse déterminée ne comprend pas de décalage, et peut donc être comparée par un moyen de comparaison 8b à un seuil afin de déterminer une défaillance de la réduction catalytique sélective.

La description présentée ci-dessous comprend d'abord une présentation de la modélisation de la réduction catalytique sélective 6, puis des procédé et système de diagnostic du système de réduction catalytique.

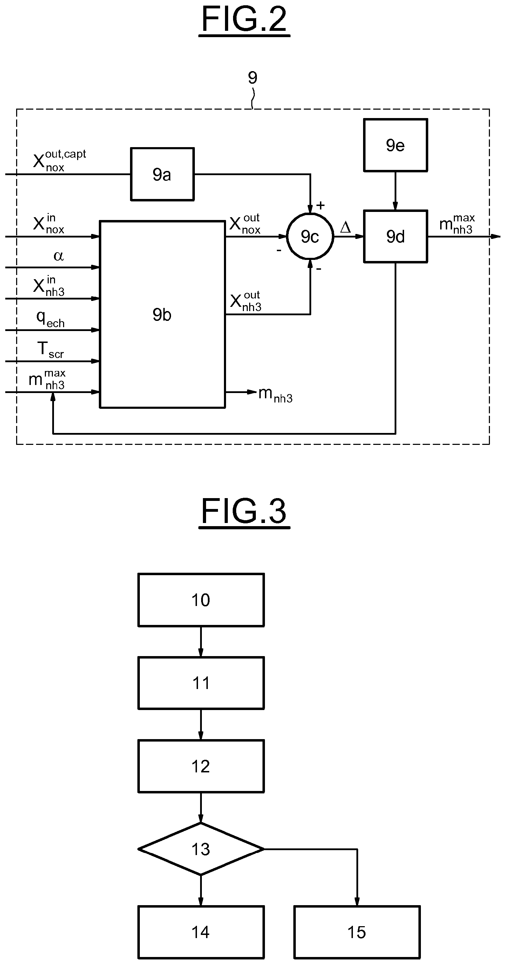

La figure 2 illustre un système de détermination 9 de la capacité maximale de stockage de l'ammoniac. On peut voir un moyen de détermination 9a du taux d'ammoniac en sortie de la réduction catalytique sélective 6 en fonction de la mesure du capteur 7 d'oxydes d'azote.

On peut également voir un moyen de modélisation 9b de la réduction catalytique sélective. La modélisation de la réduction catalytique sélective passe d'abord par l'estimation de la masse d'ammoniac. Celle-ci est donnée par un modèle réduit basé sur les phénomènes physico-chimiques ayant lieu dans la ligne d'échappement.

Le rapport $\alpha$ entre le dioxyde d'azote (NO2) et les oxydes d'azotes (NOx) imposé par la combinaison du catalyseur d'oxydation (DOC) et du filtre à particules (FAP) à l'entrée de la réduction catalytique sélective 6 présente une grande influence sur l'efficacité de la réduction catalytique sélective 6.

Toutefois, ce rapport $\alpha$ entre le dioxyde d'azote ($NO_2$) et les oxydes d'azotes ($NO_x$) ne se mesure pas. Il faut donc l'estimer via un modèle ou une cartographie en fonction du débit d'échappement $q_{ech}$ et de la température à l'entrée du catalyseur d'oxydation (DOC), notée $T_{doc}$. Le débit à l'échappement $q_{ech}$ est mesuré ou modélisé en fonction des différents débits gazeux du moteur.

On peut déterminer ensuite les taux de monoxyde d'azote $X_{nc}^{in}$ et de dioxyde d'azote $X_{no2}^{in}$ en entrée de la réduction catalytique sélective en fonction du taux d'oxydes d'azote ($NO_x$) en sortie moteur $X_{nox}^{in}$ et du rapport entre le dioxyde d'azote ($NO_2$) et les oxydes d'azotes ($NO_x$), noté $\alpha$. L'équation suivante explicite cette détermination.

$$\begin{aligned} X_{no2}^{in} &= \alpha\left(T_{doc}, q_{ech}\right) \cdot X_{nox}^{in} \\ X_{no}^{in} &= \left(1 - \alpha\left(T_{doc}, q_{ech}\right)\right) \cdot X_{nox}^{in} \end{aligned} \qquad (Eq.\ 1)$$

Il est à noter que le taux d'oxydes d'azote ($NO_x$) en sortie moteur $X_{nox}^{in}$ peut être mesuré via un capteur ou estimé via un modèle.

Le mécanisme réactionnel simplifié suivant traduit le fonctionnement de la réduction catalytique sélective:

$$\begin{aligned} NH_3 + {}^* &\longrightarrow NH_3^{\ *} + \ldots \\ NH_3^{\ *} &\longrightarrow NH_3 + {}^* \\ NO + NH_3^{\ *} &\longrightarrow N_2 + \ldots \\ NO + NO_2 + 2NH_3^{\ *} &\longrightarrow 2N_2 + \ldots \\ NO_2 + NH_3^{\ *} &\longrightarrow N_2 + \ldots \\ NH_3 + O_2 &\longrightarrow N_2 + \ldots \end{aligned} \qquad (Eq.\ 2)$$

Avec

* : un site pouvant accueillir une molécule d'ammoniac $NH_3$,
$NH_3^*$ : représente une molécule d'ammoniac $NH_3$ stockée,
$O_2$ : une molécule de dioxygène,
$N_2$ : une molécule de diazote,
NO : une molécule de monoxyde d'azote, et
$NO_2$ : une molécule de dioxyde d'azote,

Il est possible de modéliser le mécanisme réactionnel décrit ci-dessus afin d'obtenir dynamiquement le taux

$X_{nox}^{out}$ d'oxydes d'azote (NO$_x$) et le taux $X_{nh3}^{out}$ d'ammoniac (NH$_3$) en aval de la réduction catalytique sélective ainsi que la masse $m_{NH3}$ (aussi appelée buffer) d'ammoniac (NH$_3$) stockée en fonction du taux $X_{nox}^{in}$ d'oxydes d'azote (NO$_x$) et du taux $X_{nh3}^{in}$ d'ammoniac (NH$_3$) en amont de la réduction catalytique sélective, du débit $q_{ech}$ des gaz d'échappement, de la température $T_{scr}$ de ces gaz à l'entrée de la réduction catalytique sélective, et enfin de la masse maximale d'ammoniac stockée dans la réduction catalytique sélective, notée $m_{nh3}^{max}$.

Le système d'équation illustre un tel modèle.

$$\frac{dm_{nh3}}{dt} = f\left(X_{nox}^{in}, X_{nh3}^{in}, m_{nh3}, T_{scr}, q_{ech}, \alpha, m_{nh3}^{max}\right)$$
$$X_{nox}^{out} = h_{nox}\left(X_{nox}^{in}, X_{nh3}^{in}, m_{nh3}, T_{scr}, q_{ech}, \alpha, m_{nh3}^{max}\right) \qquad (Eq.\ 3)$$
$$X_{nh3}^{out} = h_{nh3}\left(X_{nox}^{in}, X_{nh3}^{in}, m_{nh3}, T_{scr}, q_{ech}, \alpha, m_{nh3}^{max}\right)$$

Le taux $X_{nh3}^{in}$ d'ammoniac (NH$_3$) en amont de la réduction catalytique sélective peut être estimé en fonction de la quantité d'urée injectée.

En se référant toujours à la figure 2, on voit que le moyen de modélisation 9b de la réduction catalytique sélective détermine la variation de masse $\frac{dm_{nh3}}{dt}$ d'ammoniac (NH3) en fonction du temps, le taux $X_{nox}^{out}$ d'oxydes d'azote (NO$_x$) et le taux $X_{nh3}^{out}$ d'ammoniac (NH$_3$) en aval de la réduction catalytique sélective en fonction du taux $X_{nox}^{in}$ d'oxydes d'azote (NO$_x$) en amont de la réduction catalytique sélective et du débit $q_{ech}$ des gaz d'échappement, provenant du moteur à combustion interne 1, de la température $T_{scr}$ de ces gaz à l'entrée de la réduction catalytique sélective provenant du deuxième capteur de température 5, du rapport $\alpha$ entre le dioxyde d'azote (NO2) et les oxydes d'azotes (NOx), de la masse maximale $m_{nh3}^{max}$ d'ammoniac stockée dans la réduction catalytique sélective, du taux $X_{nh3}^{in}$ d'ammoniac (NH$_3$) en amont de la réduction catalytique sélective, de la masse courante $m_{nh3}$ d'ammoniac stockée dans la réduction catalytique sélective. Il est à noter que la masse maximale $m_{nh3}^{max}$ d'ammoniac stockée dans la réduction catalytique sélective est une donnée de conception de la réduction catalytique sélective 6.

En connaissant la variation de masse d'ammoniac au cours du temps $\frac{dm_{nh3}}{dt}$, le taux $X_{nox}^{out}$ d'oxydes d'azote (NO$_x$) et le taux $X_{nh3}^{out}$ d'ammoniac (NH$_3$) en aval de la réduction catalytique sélective, il est possible de déterminer la masse maximale d'ammoniac stockée via un observateur. Préalablement à la définition de l'observateur, on décompose la mesure du capteur d'oxydes d'azote (NO$_x$) en aval de la réduction catalytique sélective pour rendre compte de sa capacité à mesurer similairement les oxydes d'azote et l'ammoniac. L'équation suivante rend compte de cette décomposition.

$$X_{nox}^{out,capt} = X_{nox}^{out} + X_{nh3}^{out} \qquad (Eq.\ 4)$$

Avec

$X_{nox}^{out,capt}$ : Valeur de la mesure du capteur d'oxydes d'azote

$X_{nox}^{out}$ : Taux d'oxydes d'azote

$X_{nh3}^{out}$ : Taux d'ammoniac (NH$_3$) en aval de la réduction catalytique sélective

Cette répartition entre deux contributions traduit, comme cela a été décrit plus haut, le fait qu'il n'est pas possible de distinguer les oxydes d'azote (NO$_x$) de l'ammoniac (NH$_3$) au niveau de la réduction catalytique sélective.

En combinant les équations 3 et 4, on propose l'observateur suivant :

$$\frac{dm_{nh3}}{dt} = f\left(X_{nox}^{in}, X_{nh3}^{in}, m_{nh3}, T_{scr}, q_{ech}, \alpha, m_{nh3}^{max}\right)$$

$$X_{nox}^{out} = h_{nox}\left(X_{nox}^{in}, X_{nh3}^{in}, m_{nh3}, T_{scr}, q_{ech}, \alpha, m_{nh3}^{max}\right) \qquad (Eq.\ 5)$$

$$X_{nh3}^{out} = h_{nh3}\left(X_{nox}^{in}, X_{nh3}^{in}, m_{nh3}, T_{scr}, q_{ech}, \alpha, m_{nh3}^{max}\right)$$

$$\frac{dm_{nh3}^{max}}{dt} = -K\Delta$$

Avec

$$\Delta = X_{nox}^{out,capt} - X_{nox}^{out} - X_{nh3}^{out} \qquad (Eq.\ 6)$$

K : gain strictement positif.

Sur la figure 2, on peut voir que le système de détermination 9 de la capacité maximale de stockage de l'ammoniac comprend également un soustracteur 9c connecté en entrée au moyen de détermination 9a du taux d'ammoniac en sortie de la réduction catalytique sélective 6 et au moyen de modélisation 9b de la réduction catalytique sélective, et connecté en sortie à un moyen de calcul 9d apte à déterminer la masse maximale $m_{nh3}^{max}$ d'ammoniac stockée dans la réduction catalytique sélective en fonction du signal reçu du soustracteur 9c et d'une mémoire 9e.

Le soustracteur 9c permet de déterminer le paramètre $\Delta$ par application de l'équation 6 en soustrayant les valeurs reçues du moyen de modélisation 9b de la réduction catalytique sélective à la valeur reçue du moyen de détermination 9a.

Le moyen de calcul 9d détermine la masse maximale $m_{nh3}^{max}$ d'ammoniac stockée dans la réduction catalytique sélective en fonction du signal reçu de la mémoire 9e lorsque le système de détermination 9 de la capacité maximale de stockage de l'ammoniac est initialisé. Dans les autres situations, le moyen de calcul 9d détermine la masse maximale $m_{nh3}^{max}$ d'ammoniac stockée dans la réduction catalytique sélective en intégrant par rapport au temps, le produit du paramètre $\Delta$ par la constante K mémorisée. Ce faisant, le moyen de calcul 9d applique la troisième équation du système d'équations (Eq. 5).

Le moyen de calcul 9d estime également si le paramètre $\Delta$ est nul. Dans un tel cas, le moyen de calcul 9d émet la valeur déterminée de la masse maximale $m_{nh3}^{max}$ d'ammoniac stockée dans la réduction catalytique sélective.

Le moyen de comparaison 8b reçoit du moyen de calcul 9d un signal portant la masse maximale $m_{nh3}^{max}$ d'ammoniac stockée dans la réduction catalytique sélective 6. Le moyen de comparaison 8b réalise la comparaison de la masse maximale avec un seuil mémorisé, permettant de différencier une réduction catalytique sélective en bon état d'une réduction catalytique sélective défectueuse. Si la masse maximale est supérieure au seuil, un signal d'absence de panne est émis, sinon un signal de panne est émis. Alternativement, seul le signal de panne est émis, et uniquement lorsque les conditions d'émission sont réunies.

L'utilisation de l'observateur décrit ci-dessus sera mieux comprise à la lumière de l'exemple numérique suivant.

On pose que la masse maximale d'ammoniac pouvant être stocké dans une réduction catalytique sélective en bon état est égale à 4g.

Par ailleurs, comme on se place dans des conditions de fuite d'ammoniac ($NH_3$), on peut négliger les oxydes d'azote ($NO_x$) en sortie de la réduction catalytique sélective. En effet, les oxydes d'azotes seront réduits par l'excédent d'ammoniac ($NH_3$).

On initialise le modèle avec une masse maximale $m_{nh3}^{max}$ d'ammoniac stockée dans le catalyseur égale à la valeur de la masse maximale d'ammoniac pouvant être stocké dans une réduction catalytique sélective en bon état, soit 4g dans le présent exemple puis on détermine les valeurs du taux d'oxydes d'azote et du taux d'ammoniac ($NH_3$) en aval de la réduction catalytique sélective.

On détermine ensuite la valeur du paramètre $\Delta$ en fonction des valeurs modélisées du taux d'oxydes d'azote et du taux d'ammoniac ($NH_3$) en aval de la réduction catalytique sélective et de la mesure du capteur d'oxydes d'azotes.

Si le paramètre $\Delta$ est positif, alors la masse maximale $m_{nh3}^{max}$ d'ammoniac stockée dans le catalyseur est inférieure à la masse maximale avec laquelle la réduction catalytique sélective a été modélisée.

On détermine alors une nouvelle masse maximale en fonction du paramètre $\Delta$ déterminé. La nouvelle masse maximale est réinjectée en entrée du modèle de sorte que l'on détermine de nouvelles valeurs du taux d'oxydes d'azote et du taux d'ammoniac (NH₃) en aval de la réduction catalytique sélective.

Ces nouvelles valeurs sont alors comparées à la mesure de taux d'oxydes d'azote en sortie de la réduction catalytique sélective, afin de déterminer une nouvelle valeur du paramètre Δ. Si le paramètre Δ est positif, le procédé se poursuit par la détermination de nouvelles valeurs de la masse maximale Δ d'ammoniac stockée dans le catalyseur, du taux d'oxydes d'azote et du taux d'ammoniac (NH₃) en aval de la réduction catalytique sélective, et ce jusqu'à ce que l'on obtienne une valeur nulle du paramètre Δ.

Dès que le paramètre Δ est nul, on mémorise la valeur de la masse maximale $m_{nh3}^{max}$ d'ammoniac stockée dans le catalyseur en cours et on la compare à un seuil. Si la valeur est supérieure au seuil, la réduction catalytique sélective est en bon état, sinon un défaut est détecté et un signal d'alerte émis.

Le procédé de diagnostic de la réduction catalytique sélective, illustré par la figure 3, utilise les modèles et équations explicités ci-dessus.

Le procédé comprend une première étape 10 au cours de laquelle on procède à la vidange de la masse d'ammoniac. En effet, afin de réaliser le diagnostic dans les meilleures conditions, on procède à une vidange qui permet de faire débuter l'estimation de la masse maximale $m_{nh3}^{max}$ d'ammoniac stockée dans la réduction catalytique sélective d'une référence absolue et sensiblement proche de zéro. Cette vidange se fait en coupant pendant quelques minutes l'injection d'urée.

Au cours d'une deuxième étape 11, on procède à une injection d'une masse déterminée d'urée suffisamment élevée pour que la réduction catalytique sélective soit à la limite de la fuite d'ammoniac (NH₃) ou dépasse cette limite. En d'autres termes, on injecte plus d'ammoniac (NH₃) que le système peut théoriquement en contenir. La masse à injecter peut être déterminée en fonction de la masse maximale d'ammoniac stockée dans une réduction catalytique ne présentant pas de défaut

Au cours d'une troisième étape 12, on estime le taux d'ammoniac $X_{nh3}^{out}$ et le taux d'oxydes d'azote $X_{nh3}^{out}$ en aval de la réduction catalytique sélective via le modèle en appliquant l'équation 5. On mesure également le taux $X_{nox}^{out,capt}$ d'ammoniac en aval de la réduction catalytique sélective par l'intermédiaire du capteur 7 d'oxydes d'azote. On détermine ensuite le paramètre Δ en appliquant l'équation 6. Si le paramètre Δ est positif, on détermine une nouvelle valeur de la masse maximale $m_{nh3}^{max}$ d'ammoniac stockée dans la réduction catalytique sélective en fonction de la valeur du paramètre Δ. On détermine alors de nouvelles valeurs du taux d'ammoniac $X_{nh3}^{out}$ et du taux d'oxydes d'azote $X_{nh3}^{out}$ en aval de la réduction catalytique sélective via le modèle avant de déterminer une nouvelle valeur du paramètre Δ.

La troisième étape est répétée jusqu'à ce que la valeur du paramètre Δ soit nulle. On mémorise alors la dernière valeur de la masse maximale $m_{nh3}^{max}$ d'ammoniac stockée dans la réduction catalytique sélective.

Au cours d'une quatrième étape 13, on compare la masse maximale $m_{nh3}^{max}$ d'ammoniac stockée dans la réduction catalytique sélective à un seuil. Si la masse maximale est supérieure au seuil, la réduction catalytique sélective ne présente pas de défaut. Si tel n'est pas le cas, la réduction catalytique sélective présente un défaut.

Un signal correspondant à l'état de la réduction catalytique sélective est alors émis en sortie.

**Revendications**

1. Système de diagnostic de la réduction catalytique sélective d'un véhicule automobile muni d'un moteur à combustion interne (1) connecté par un collecteur d'échappement à successivement un ensemble (3) comprenant un catalyseur d'oxydes d'azotes et un filtre à particules et une réduction catalytique sélective (6), et un moyen d'injection (4) d'urée disposé en amont de la réduction catalytique sélective, **caractérisé par** des moyens de mise en oeuvre du procédé selon les revendications 6 à 10, ces moyens comprenant:

   un moyen de vidange de la masse d'ammoniac stockée dans la réduction catalytique sélective (6),
   un moyen de commande (8a) de la vidange et de l'injection,
   un moyen de mesure (7) de la quantité d'ammoniac en sortie de la réduction catalytique sélective,
   un système de détermination (9) de la masse maximale d'ammoniac stockée dans la réduction catalytique sélective (6),
   un moyen de comparaison (8b) de la valeur déterminée de la masse maximale d'ammoniac stockée dans la réduction catalytique sélective (6) à un seuil, apte à émettre un signal de défaut en fonction du résultat de la comparaison.

**2.** Système selon la revendication précédente, dans lequel le moyen de détermination de la masse maximale d'ammoniac stockée dans la réduction catalytique sélective (6) comprend

un moyen de modélisation (9b) de la réduction catalytique sélective apte à estimer le taux d'ammoniac et le taux d'oxydes d'azote en aval de la réduction catalytique sélective (6) via un modèle,

un moyen de détermination (9a) du taux d'ammoniac en sortie de la réduction catalytique sélective (6) en fonction du signal reçu du moyen de mesure (7), et

un moyen de calcul (9d) apte à déterminer l'écart entre la mesure du taux d'ammoniac en sortie de la réduction catalytique sélective (6) et les valeurs modélisées du taux d'ammoniac et du taux d'oxydes d'azote en aval de la réduction catalytique sélective (6), et à déterminer une nouvelle valeur de la masse maximale d'ammoniac stockée dans la réduction catalytique sélective (6) si l'écart est positif, à transmettre la nouvelle valeur de la masse maximale d'ammoniac stockée dans la réduction catalytique sélective (6) au moyen de modélisation (9b) de la réduction catalytique sélective afin de déterminer de nouvelles valeurs jusqu'à ce que l'écart soit nul,.

le moyen de calcul (9d) étant apte à émettre la masse maximale d'ammoniac stockée dans la réduction catalytique sélective (6) lorsque l'écart est nul.

**3.** Système selon l'une quelconque des revendications précédentes, dans lequel le signal de défaut de la réduction catalytique sélective (6) prend une première valeur si la valeur déterminée de la masse maximale d'ammoniac stockée dans la réduction catalytique sélective (6) est inférieure à un seuil, tandis qu'il prend une deuxième valeur si tel n'est pas le cas.

**4.** Système selon l'une quelconque des revendications précédentes, dans lequel le moyen de modélisation (9b) de la réduction catalytique sélective est apte à estimer le taux d'ammoniac en aval de la réduction catalytique sélective via un modèle fonction du rapport entre le dioxyde d'azote et les oxydes d'azote en aval du collecteur d'échappement, de la température en amont de la réduction catalytique sélective (6), de la masse d'urée injectée en amont de la réduction catalytique sélective, de la masse maximale d'ammoniac stockée dans la réduction catalytique sélective (6), du débit à l'échappement, du taux d'ammoniac en amont de la réduction catalytique sélective (6), et du taux d'oxydes d'azote en amont de la réduction catalytique sélective (6).

**5.** Système selon la revendication 4, dans lequel le moyen de modélisation (9b) de la réduction catalytique sélective est également apte à déterminer le rapport entre le dioxyde d'azote et le monoxyde d'azote en aval du collecteur d'échappement en fonction de la température en amont de l'ensemble (3) de filtre à particules et catalyseur, du débit à l'échappement du moteur à combustion interne et du taux d'oxydes d'azote en aval du collecteur d'échappement.

**6.** Procédé de diagnostic de la réduction catalytique sélective d'un véhicule automobile muni d'un moteur à combustion interne (1) connecté par un collecteur d'échappement à successivement un ensemble (3) comprenant un catalyseur d'oxydes d'azotes et un filtre à particules et une réduction catalytique sélective (6), comprenant les étapes suivantes :

on vidange la masse d'ammoniac stockée dans la réduction catalytique sélective (6),

on procède à une injection, en amont de la réduction catalytique sélective (6), d'une masse d'urée supérieure à la masse maximale pouvant être stockée par la réduction catalytique sélective (6),

on détermine la masse maximale d'ammoniac stockée dans la réduction catalytique sélective (6), et

on émet un signal de défaut en fonction du résultat de la comparaison de la valeur déterminée de la masse maximale d'ammoniac stockée dans la réduction catalytique sélective (6) à un seuil.

**7.** Procédé selon la revendication 6, dans lequel on détermine la masse maximale d'ammoniac stockée dans la réduction catalytique sélective (6) en effectuant les étapes suivantes :

on initialise un modèle avec une valeur mémorisée de la masse maximale pouvant être stockée dans la réduction catalytique sélective (6),

on estime le taux d'ammoniac et le taux d'oxydes d'azote en aval de la réduction catalytique sélective (6) via un modèle,

on mesure le taux d'ammoniac en sortie de la réduction catalytique sélective (6),

on détermine l'écart entre le taux d'ammoniac en sortie de la réduction catalytique sélective (6) et les valeurs modélisées du taux d'ammoniac et du taux d'oxydes d'azote en aval de la réduction catalytique sélective (6), et

si l'écart est positif, on détermine une nouvelle valeur de la masse maximale d'ammoniac stockée dans la réduction catalytique sélective (6), et on détermine de nouvelles valeurs du taux d'ammoniac et du taux d'oxydes d'azote en aval de la réduction catalytique sélective (6) via le modèle, jusqu'à ce que l'écart soit nul,

lorsque l'écart est nul, on émet la masse maximale stockée dans la réduction catalytique sélective (6).

8. Procédé selon les revendications 6 ou 7, dans lequel si la valeur déterminée de la masse maximale d'ammoniac stockée dans la réduction catalytique sélective (6) est inférieure à un seuil, on émet un signal de défaut de la réduction catalytique sélective (6) prenant une première valeur, tandis qu'il prend une deuxième valeur si tel n'est pas le cas.

9. Procédé selon l'une quelconque des revendications 6 à 8, dans lequel on estime le taux d'ammoniac et le taux d'oxydes d'azote en aval de la réduction catalytique sélective (6) via un modèle fonction du rapport entre la quantité de monoxyde d'azote et de dioxyde d'azote en aval du collecteur d'échappement, de la température en amont de la réduction catalytique sélective (6), de la masse d'urée injectée en amont de la réduction catalytique sélective, de la masse maximale d'ammoniac stockée dans la réduction catalytique sélective (6), du débit à l'échappement, du taux d'ammoniac en amont de la réduction catalytique sélective (6), et du taux d'oxydes d'azote en amont de la réduction catalytique sélective (6).

10. Procédé selon la revendication 9, dans lequel on détermine le rapport entre le monoxyde d'azote et le dioxyde d'azote en aval du collecteur d'échappement en fonction de la température en amont de l'ensemble (3) de filtre à particules et catalyseur, du débit à l'échappement du moteur à combustion interne et du taux d'oxydes d'azote en aval du collecteur d'échappement.

**Patentansprüche**

1. System zur Diagnose des selektiven katalytischen Reduktionssystems eines Kraftfahrzeugs, das mit einem Verbrennungsmotor (1) versehen ist, der durch einen Auspuffkrümmer nacheinander an eine Anordnung (3), die einen Stickoxidkatalysator und einen Partikelfilter und ein selektives katalytisches Reduktionssystem (6) aufweist, und ein Mittel zum Einspritzen (4) von Urea, das vorgelagert vor dem selektiven katalytischen Reduktionssystem angeordnet ist, angeschlossen ist,
**gekennzeichnet durch** Mittel zum Umsetzen des Verfahrens nach den Ansprüchen 6 bis 10, wobei diese Mittel Folgendes aufweisen:

ein Mittel zum Entleeren der Masse an Ammoniak, die in dem selektiven katalytischen Reduktionssystem (6) gespeichert ist,
ein Mittel zum Steuern (8a) des Entleerens und des Einspritzens,
ein Mittel zum Messen (7) der Menge an Ammoniak am Ausgang des selektiven katalytischen Reduktionssystems,
ein System zum Bestimmen (9) der maximalen Masse an Ammoniak, die in dem selektiven katalytischen Reduktionssystem (6) gespeichert ist,
ein Mittel zum Vergleichen (8b) des bestimmten Wertes der maximalen Masse an Ammoniak, die in dem selektiven katalytischen Reduktionssystem (6) gespeichert ist, mit einem Schwellenwert, das geeignet ist, ein Fehlersignal in Abhängigkeit von dem Ergebnis des Vergleichens auszugeben.

2. System nach den vorhergehenden Anspruch, wobei das Mittel zum Bestimmen der maximalen Masse an Ammoniak, die in dem selektiven katalytischen Reduktionssystem (6) gespeichert ist, Folgendes aufweist:

ein Mittel zur Modellierung (9b) der selektiven katalytischen Reduktion, das geeignet ist, den Ammoniakgehalt und den Stickoxidgehalt nachgelagert nach dem selektiven katalytischen Reduktionssystem (6) über ein Modell zu errechnen,
ein Mittel zum Bestimmen (9a) des Ammoniakgehalts am Ausgang des selektiven katalytischen Reduktionssystems (6) in Abhängigkeit von dem Signal, das von dem Mittel zum Messen (7) erhalten wird, und
ein Berechnungsmittel (9d), das geeignet ist, die Differenz zwischen der Messung des Ammoniakgehalts am Ausgang des selektiven katalytischen Reduktionssystems (6) und den modellierten Werten des Ammoniakgehalts und des Stickoxidgehalts nachgelagert nach dem selektiven katalytischen Reduktionssystem (6) zu bestimmen, und einen neuen Wert der maximalen Masse an Ammoniak, die in dem selektiven katalytischen Reduktionssystem (6) gespeichert ist, zu bestimmen, wenn die Differenz positiv ist, den neuen Wert der maximalen Masse an Ammoniak, die in dem selektiven katalytischen Reduktionssystem (6) gespeichert ist, an das Mittel zur Modellierung (9b) der selektiven katalytischen Reduktion, zu übermitteln, um neue Werte zu bestimmen, bis diese Differenz Null ist,

wobei das Berechnungsmittel (9d) geeignet ist, die maximale Masse an Ammoniak, die in dem selektiven katalytischen Reduktionssystem (6) gespeichert ist, auszugeben, wenn die Differenz gleich Null ist.

3. System nach einem der vorhergehenden Ansprüche, wobei das Fehlersignal des selektiven katalytischen Reduktionssystems (6) einen ersten Wert annimmt, wenn der bestimmte Wert der maximalen Masse an Ammoniak, die in dem selektiven katalytischen Reduktionssystem (6) gespeichert ist, niedriger als ein Schwellenwert ist, während es einen zweiten Wert annimmt, wenn dies nicht der Fall ist.

4. System nach einem der vorhergehenden Ansprüche, wobei das Mittel zur Modellierung (9b) der selektiven katalytischen Reduktion geeignet ist, den Ammoniakgehalt nachgelagert nach dem selektiven katalytischen Reduktionssystem über ein Modell zu errechnen, das von dem Verhältnis zwischen dem Stickstoffdioxid und den Stickoxiden nachgelagert nach dem Auspuffkrümmer, der Temperatur vorgelagert vor dem selektiven katalytischen Reduktionssystem (6), der Masse an Urea, die vorgelagert vor dem selektiven katalytischen Reduktionssystem eingespritzt wird, der maximalen Masse an Ammoniak, die in dem selektiven katalytischen Reduktionssystem (6) gespeichert ist, der Auspuffströmung, dem Ammoniakgehalt vorgelagert vor dem selektiven katalytischen Reduktionssystem (6) und dem Stickoxidgehalt vorgelagert vor dem selektiven katalytischen Reduktionssystem (6) abhängt.

5. System nach Anspruch 4, wobei das Mittel zur Modellierung (9b) der selektiven katalytischen Reduktion ebenfalls geeignet ist, das Verhältnis zwischen dem Stickstoffdioxid und dem Stickstoffmonoxid nachgelagert nach dem Auspuffkrümmer in Abhängigkeit von der Temperatur vorgelagert vor der Anordnung (3) des Partikelfilters und des Katalysators, der Auspuffströmung des Verbrennungsmotors und dem Stickoxidgehalt nachgelagert nach dem Auspuffkrümmer zu bestimmen.

6. Verfahren zur Diagnose des selektiven katalytischen Reduktionssystems eines Kraftfahrzeugs, das mit einem Verbrennungsmotor (1) versehen ist, der durch einen Auspuffkrümmer nacheinander an eine Anordnung (3) angeschlossen ist, die einen Stickoxidkatalysator und einen Partikelfilter und ein selektives katalytisches Reduktionssystem (6) aufweist, das die folgenden Schritte aufweist:

Entleeren der Masse an Ammoniak, die in dem selektiven katalytischen Reduktionssystem (6) gespeichert wird, Vornehmen eines Einspritzens vorgelagert vor dem selektiven katalytischen Reduktionssystem (6) von einer Masse an Urea, die größer als die maximale Masse ist, die von dem selektiven katalytischen Reduktionssystem (6) gespeichert werden kann, Bestimmen der maximalen Masse an Ammoniak, die in dem selektiven katalytischen Reduktionssystem (6) gespeichert wird, und Ausgeben eines Fehlersignals in Abhängigkeit von dem Ergebnis des Vergleichens des bestimmten Wertes der maximalen Masse an Ammoniak, die in dem selektiven katalytischen Reduktionssystem (6) gespeichert wird, mit einem Schwellenwert.

7. Verfahren nach Anspruch 6, wobei die maximale Masse an Ammoniak, die in dem selektiven katalytischen Reduktionssystem (6) gespeichert wird, bestimmt wird, indem die folgenden Schritte durchgeführt werden:

Initialisieren eines Modells mit einem gespeicherten Wert der maximalen Masse, die in dem selektiven katalytischen Reduktionssystem (6) gespeichert werden kann, Errechnen des Ammoniakgehalts und des Stickoxidgehalts nachgelagert nach dem selektiven katalytischen Reduktionssystem (6) über ein Modell, Messen des Ammoniakgehalts am Ausgang des selektiven katalytischen Reduktionssystems (6), Bestimmen der Differenz zwischen dem Ammoniakgehalt am Ausgang des selektiven katalytischen Reduktionssystems (6) und den modellierten Werten des Ammoniakgehalts und des Stickoxidgehalts nachgelagert nach dem selektiven katalytischen Reduktionssystem (6) und, wenn die Differenz positiv ist, Bestimmen eines neuen Wertes der maximalen Masse an Ammoniak, die in dem selektiven katalytischen Reduktionssystem (6) gespeichert wird, und Bestimmen von neuen Werten des Ammoniakgehalts und des Stickoxidgehalts nachgelagert nach dem selektiven katalytischen Reduktionssystem (6) über das Modell, bis die Differenz Null ist, wenn die Differenz gleich Null ist, Ausgeben der maximalen Masse, die in dem selektiven katalytischen Reduktionssystem (6) gespeichert wird.

8. Verfahren nach den Ansprüchen 6 oder 7, wobei, wenn der bestimmte Wert der maximalen Masse an Ammoniak, die in dem selektiven katalytischen Reduktionssystem (6) gespeichert wird, niedriger als ein Schwellenwert ist, ein Fehlersignal des selektiven katalytischen Reduktionssystems (6) ausgegeben wird, das einen ersten Wert annimmt, während es einen zweiten Wert annimmt, wenn dies nicht der Fall ist.

9. Verfahren nach einem der vorhergehenden Ansprüche 6 bis 8, wobei der Ammoniakgehalt und der Stickoxidgehalt nachgelagert nach dem selektiven katalytischen Reduktionssystem (6) über ein Modell errechnet werden, das von dem Verhältnis zwischen der Menge an Stickstoffmonoxid und an Stickstoffdioxid nachgelagert nach dem Auspuffkrümmer, der Temperatur vorgelagert vor dem selektiven katalytischen Reduktionssystem (6), der Masse an Urea, die vorgelagert vor dem selektiven katalytischen Reduktionssystem eingespritzt wird, der maximalen Masse an Ammoniak, die in dem selektiven katalytischen Reduktionssystem (6) gespeichert wird, der Auspuffströmung, dem Ammoniakgehalt vorgelagert vor dem selektiven katalytischen Reduktionssystem (6) und dem Stickoxidgehalt vorgelagert vor dem selektiven katalytischen Reduktionssystem (6) abhängt.

10. Verfahren nach Anspruch 9, wobei das Verhältnis zwischen dem Stickstoffmonoxid und dem Stickstoffdioxid nachgelagert nach dem Auspuffkrümmer in Abhängigkeit von der Temperatur vorgelagert vor der Anordnung (3) des Partikelfilters und des Katalysators, der Auspuffströmung des Verbrennungsmotors und dem Stickoxidgehalt nachgelagert nach dem Auspuffkrümmer bestimmt wird.

## Claims

1. System for diagnosing the selective catalytic reduction system of a motor vehicle equipped with an internal combustion engine (1) connected via an exhaust manifold successively to an assembly (3) comprising a nitrous oxide catalyst and a particulate filter, and a selective catalytic reduction system (6), and
a urea injection means (4) arranged upstream of the selective catalytic reduction system, **characterized by** means for implementing the method according to claims 6 to 10, these means comprising:

   - a means for evacuation of the ammonia mass stored in the selective catalytic reduction system,
   - a means (8a) for control of the evacuation and injection,
   - a means (7) for measuring the quantity of ammonia at the outlet from the selective catalytic reduction system,
   - a system (9) for determining the maximum mass of ammonia stored in the selective catalytic reduction system (6),
   - a means (8b) for comparing the value determined for the maximum mass of ammonia stored in the selective catalytic reduction system (6) with a threshold, and able to emit a fault signal as a function of the comparison result.

2. System according to the preceding claim, wherein the means for determining the maximum mass of ammonia stored in the selective catalytic reduction system (6) comprises:

   - a means (9b) for modeling the selective catalytic reduction system, and able to estimate the levels of ammonia and nitrous oxides downstream of the selective catalytic reduction system (6) via a model,
   - a means (9a) for determining the level of ammonia at the outlet from the selective catalytic reduction system (6) as a function of the signal received from the measurement means (7),
   - a calculation means (9d) able to determine the difference between the level of ammonia measured at the outlet from the selective catalytic reduction system (6) and modeled values for the levels of ammonia and nitrous oxides downstream of the selective catalytic reduction system (6), to determine a new value for the maximum mass of ammonia stored in the selective catalytic reduction system (6) if the difference is positive, and to transmit the new value for the maximum mass of ammonia stored in the selective catalytic reduction system (6) to the means (9b) for modeling the selective catalytic reduction system in order to determine new values until the difference is zero,
   - the calculation means (9d) being able to emit the maximum mass of ammonia stored in the selective catalytic reduction system (6) when the difference is zero.

3. System according to either of the preceding claims, wherein the fault signal for the selective catalytic reduction system (6) assumes a first value if the value determined for the maximum mass of ammonia stored in the selective catalytic reduction system (6) is less than a threshold, while it assumes a second value if this is not the case.

4. System according to any of the preceding claims, wherein the means (9b) for modeling the selective catalytic reduction system is able to estimate the ammonia level downstream of the selective catalytic reduction system via a model, as a function of the ratio between the nitrogen dioxide and the nitrous oxides downstream of the exhaust manifold, the temperature upstream of the selective catalytic reduction system (6), the mass of urea injected upstream of the selective catalytic reduction system, the maximum mass of ammonia stored in the selective catalytic reduction system (6), the exhaust gas flow, the level of ammonia upstream of the selective catalytic reduction system (6), and the level of nitrous oxides upstream of the selective catalytic reduction system (6).

5. System according to Claim 4, wherein the means (9b) for modeling the selective catalytic reduction system is also able to determine the ratio between nitrogen dioxide and nitrogen monoxide downstream of the exhaust manifold, as a function of the temperature upstream of the assembly (3) of the particulate filter and the catalyst, the exhaust gas flow of the internal combustion engine, and the level of nitrous oxides downstream of the exhaust manifold.

6. Method for diagnosing the selective catalytic reduction system of a motor vehicle equipped with an internal combustion engine (1) connected via an exhaust manifold successively to an assembly (3) comprising a nitrous oxide catalyst and a particulate filter, and a selective catalytic reduction system (6), comprising the following steps:

- evacuation of the ammonia mass stored in the selective catalytic reduction system (6),
- injection, upstream of the selective catalytic reduction system (6), of a mass of urea greater than the maximum mass which can be stored by the selective catalytic reduction system (6),
- determination of the maximum mass of ammonia stored in the selective catalytic reduction system (6), and
- emission of a fault signal as a function of the result of comparison of the value determined for the maximum mass of ammonia stored in the selective catalytic reduction system (6) with a threshold.

7. Method according to Claim 6, wherein the maximum mass of ammonia stored in the selective catalytic reduction system (6) is determined by performing the following steps:

- initialization of a model with a saved value for the maximum mass which can be stored in the selective catalytic reduction system (6),
- estimation of the levels of ammonia and nitrous oxides downstream of the selective catalytic reduction system (6) via a model,
- measurement of the ammonia level at the outlet from the selective catalytic reduction system (6),
- determination of the difference between the ammonia level at the outlet from the selective catalytic reduction system (6) and the modeled values for the levels of ammonia and nitrous oxides downstream of the selective catalytic reduction system (6), and
- if the difference is positive, determination of a new value for the maximum mass of ammonia stored in the selective catalytic reduction system (6), and determination of new values for the levels of ammonia and nitrous oxides downstream of the selective catalytic reduction system (6) via the model until the difference is zero,
- when the difference is zero, the value of the maximum mass stored in the selective catalytic reduction system (6) is emitted.

8. Method according to Claim 6 or 7, wherein if the value determined for the maximum mass of ammonia stored in the selective catalytic reduction system (6) is less than a threshold, a fault signal assuming a first value is emitted for the selective catalytic reduction system (6), while it assumes a second value if this is not the case.

9. Method according to any of Claims 6 to 8, wherein the levels of ammonia and nitrous oxides downstream of the selective catalytic reduction system (6) are estimated via a model, as a function of the ratio between the quantity of nitrogen monoxide and nitrogen dioxide downstream of the exhaust manifold, the temperature upstream of the selective catalytic reduction system (6), the mass of urea injected upstream of the selective catalytic reduction system, the maximum mass of ammonia stored in the selective catalytic reduction system (6), the exhaust gas flow, the level of ammonia upstream of the selective catalytic reduction system (6) and the level of nitrous oxides upstream of the selective catalytic reduction system (6).

10. Method according to Claim 9, wherein the ratio between the nitrogen monoxide and the nitrogen dioxide downstream of the exhaust manifold is determined as a function of the temperature upstream of the assembly (3) of the particulate filter and the catalyst, the exhaust gas flow from the internal combustion engine, and the level of nitrous oxides downstream of the exhaust manifold.

# FIG.1

## FIG.2

## FIG.3

**EP 3 014 082 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 102010029740
- WO 2008103113 A
- WO 2007037730 A